# EUROPEAN PATENT APPLICATION

(11) **EP 4 395 428 A1**
(43) Date of publication of application: **03.07.2024**
(21) Application number: 22863092.7
(22) Date of filing: 12.08.2022
(51) Int. Cl.: H04W 56/00

(54) **LOCAL CLOCK CALIBRATION METHOD, USER EQUIPMENT AND COMPUTER-READABLE STORAGE MEDIUM**

(30) Priority: 03.09.2021 CN 202111034407
(71) Applicant: ZTE Corporation, Shenzhen, Guangdong 518057 (CN)
(72) Inventor: WANG, Xiaojian, Shenzhen, Guangdong 518057 (CN)
(74) Representative: Savi, Massimiliano
(86) International application number: PCT/CN2022/112228
(87) International publication number: WO 2023/029952

(57) **Abstract**

A local clock calibration method, which is applied to a user equipment (UE). The method comprises: acquiring a system frame that is periodically sent by a base station, wherein the system frame comprises a system information block (SIB), and the SIB comprises a first sending moment at which the base station sends the system frame (S200); according to the first sending moment and the frame length of the system frame, determining a second sending moment at which the base station sends the SIB (S300); determining the length of a reference unit period according to a time interval between periodically obtained second sending moments (S400); and adjusting the frequency of a crystal oscillator of the UE according to the length of the reference unit period and a period length value, which is sent by the base station, such that a local time unit period of the UE is synchronized with the reference unit period (S500).

## Description

### CROSS-REFERENCE TO RELATED APPLICATION

This application is filed on the basis of Chinese patent application No. 202111034407.2 filed September 3, 2021, and claims priority to the Chinese patent application, the entire contents of which are incorporated herein by reference.

### TECHNICAL FIELD

The present disclosure relates to the field of communication technologies, and more particularly, to a local clock calibration method, a User Equipment (UE), and a computer-readable storage medium.

### BACKGROUND

In the fields of industrial control, unmanned vehicles, and electric power communication networks, among others, there is a requirement for multiple terminals to achieve very high synchronization and high clock precision. In related technologies, the clock calibration method adopts Global Navigation Satellite System (GNSS) technology, which requires special hardware modules and antennas. Clock calibration through GNSS technology is disadvantageous due to high costs and unsatisfactory usability. GNSS signals can be easily lost in indoor or mountainous areas, leading to failures in achieving online calibration.

### SUMMARY

The following is a summary of the subject matter set forth in this description. This summary is not intended to limit the scope of protection of the claims.

Embodiments of the present disclosure provide a local clock calibration method, a UE, and a computer-readable storage medium.

In accordance with a first aspect of the present disclosure, an embodiment provides a local clock calibration method, which is applied to a UE, includes: acquiring a system frame periodically sent by a base station, where the system frame includes a System Information Block (SIB), and the SIB includes a first sending moment at which the base station sends the system frame; determining, according to the first sending moment and a frame length of the system frame, a second sending moment at which the base station sends the SIB; determining a length of a reference unit period according to a time interval between periodically obtained second sending moments; and adjusting a frequency of a crystal oscillator of the UE according to the length of the reference unit period and a period length value sent by the base station, to synchronize a local time unit period of the UE with the reference unit period.

In accordance with a second aspect of the present disclosure, an embodiment provides a UE, including a memory, a processor, a program stored in the memory and executable by the processor, and a communication bus configured for implementing connection and communication between the processor and the memory, where the program, when executed by the processor, causes the processor to carry out the local clock calibration method in accordance with the first aspect of the embodiments of the present disclosure.

In accordance with a third aspect of the present disclosure, an embodiment provides a computer-readable storage medium, storing a computer-executable program which, when executed by a computer, causes the computer to carry out the local clock calibration method in accordance with the first aspect.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

FIG. 1 is a schematic diagram of an implementation environment according to an embodiment of the present disclosure;
FIG. 2 is a flowchart of a local clock calibration method according to an embodiment of the present disclosure;
FIG. 3 is a flowchart of calculating a second sending moment according to an embodiment of the present disclosure;
FIG. 4 is a flowchart of acquiring a length of a referent unit period according to an embodiment of the present disclosure;
FIG. 5 is a flowchart of acquiring information of a system frame according to an embodiment of the present disclosure;
FIG. 6 is a flowchart of acquiring a receiving moment according to an embodiment of the present disclosure;
FIG. 7 is a flowchart of calibrating a local clock according to an embodiment of the present disclosure;
FIG. 8 is a flowchart of calibrating a local clock according to another embodiment of the present disclosure; and
FIG. 9 is a flowchart of adjusting a frequency of a crystal oscillator according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although functional modules have been divided in the schematic diagrams of system architectures and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In related technologies, the GNSS technology is used for clock calibration of the terminal. However, the use of the GNSS technology requires the support of special hardware modules and antennas, and GNSS signals are likely to be blocked in indoor or mountainous areas, failing to implement clock calibration of the terminal.

The embodiments of the present disclosure provide a local clock calibration method, applied to a UE. The method can be used to implement local clock calibration in an environment susceptible to blockage by many obstacles nearby, and therefore is suitable for a wide range of application scenarios.

The embodiments of the present disclosure will be further described in detail below with reference to the accompanying drawings.

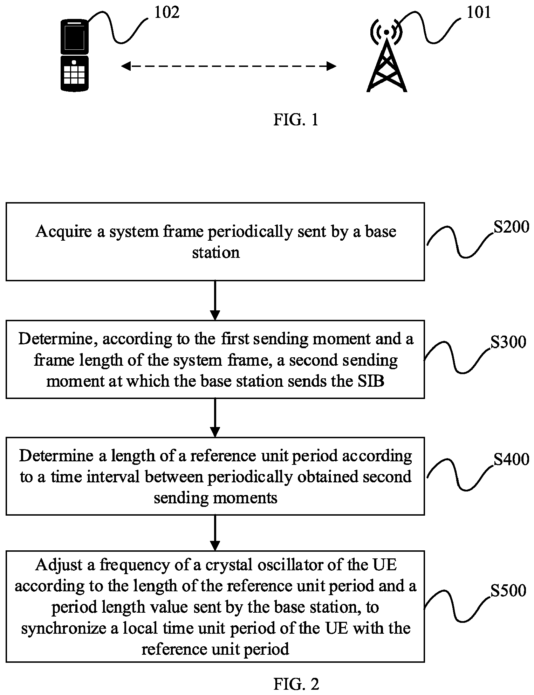

FIG. 1 is a schematic diagram of an implementation environment according to an embodiment of the present disclosure. As shown in FIG. 1, the implementation environment includes a base station 101 and a plurality of UEs 102. The UEs 102 are in communication connection with the base station 101. The UE 102 may be any electronic device having a function of communicating with the base station 101, such as a tablet computer, an intelligent in-vehicle infotainment system, a smart television, an electric vehicle, etc. The base station 101 may be a 4th Generation (4G) base station, a 5th Generation (5G) base station, or other mobile communication base stations. The 4G base station uses the Long Term Evolution (LTE) technology, and the 5G base station uses the New Radio (NR) technology. The embodiment of the present disclosure are described in detail below using the NR technology as the main application scenario.

FIG. 2 is a flowchart of a local clock calibration method according to an embodiment of the present disclosure. As shown in FIG. 2, the local clock calibration method is executed by a UE. The method includes, but not limited to, the following steps S200, S300, S400, and S500.

At S200, a system frame periodically sent by a base station is acquired.

The system frame in the embodiments of the present disclosure includes a SIB, and the SIB includes a first sending moment at which the base station sends the system frame.

It can be understood that the system frame includes a SIB, the SIB is configured in a subframe, the SIB includes a first sending moment at which the base station sends the system frame, the base station periodically sends the system frame, and the UE receives the system frame and acquires the first sending moment at which the base station sends the system frame. The first sending moment is a moment at which the base station sends a header of the system frame. The base station sends the system frame by broadcasting with a period of, for example, 640 ms, 320 ms, etc., which is set by the base station. When the period of sending the system frame by the base station is 640 ms, if the UE receives a 1st system frame including a first sending moment at the 0th second, the UE receives a 2nd system frame including a first sending moment at 640 ms. The difference between the 2nd first sending moment and the 1st first sending moment received by the UE is 640 ms.

At S300, a second sending moment at which the base station sends the SIB is determined according to the first sending moment and a frame length of the system frame.

It should be noted that the frame length of the system frame in this embodiment is 10 ms, and it can be understood by those having ordinary skills in the art that as technologies are gradually developing, the frame length of the system frame may also be 5 ms, 20 ms, etc. The SIB is located at the beginning, middle or end of the system frame. When the SIB is located at the middle of the system frame, the second sending moment of the SIB is equal to a sum of the first sending moment and half of the frame length of the system frame. When the system frame is 10 ms long, the second sending moment of the SIB is equal to a sum of the first sending moment and 5 ms.

It can be understood that the SIB is SIB 16 in the 4G LTE technology and is SIB 9 in the 5G NR technology. As technologies are gradually developing, the SIB may also be SIB 20, SIB 30, etc.

At S400, a length of a reference unit period is determined according to a time interval between periodically obtained second sending moments.

In an embodiment, the UE receives the 1st second sending moment and the 2nd second sending moment, and records an interval between the 1st second sending moment and the 2nd second sending moment through a number of times of oscillation of a local clock period of the UE, to obtain the length of the reference unit period. For example, the interval between the 1st second sending moment and the 2nd second sending moment is 640 ms, the clock period of the UE is 1 µs, and the reference unit period corresponds to 6.4*10⁵ clock periods of the UE. In this case, because the oscillation frequency of a crystal oscillator in the UE is inaccurate, the reference unit period may also correspond to 6.5*10⁵ clock periods or 6.3*10⁵ clock periods.

It can be understood that the two second sending moments may be second sending moments within two adjacent periods or may be second sending moments within two non-adjacent sending periods.

At S500, the frequency of the crystal oscillator of the UE is adjusted according to the length of the reference unit period and a period length value sent by the base station, to synchronize a local time unit period of the UE with the reference unit period.

For example, when the 640 ms duration of the local time unit period of the UE corresponds to 6.4*10⁵ clock periods of the UE and the 640 ms duration of the reference unit period corresponds to 6.5*10⁵ clock periods of the UE, the frequency of the crystal oscillator of the UE is adjusted such that the duration of the 6.4*10⁵ clock periods of the UE after the adjustment is equal to the duration of the 6.5*10⁵ clock periods of the UE before the adjustment. In this way, the local time unit period of the UE is synchronized with the reference unit period of the base station, thereby achieving clock calibration of the UE.

It can be understood that the clock period of the UE is the reciprocal of the frequency of the crystal oscillator of the UE.

It can be understood that after receiving the length of the reference unit period and the period length value sent by the base station, the UE adjusts the length of the local time unit period to be the same as the length of the reference unit period. In this case, the phase of the local time unit period may be the same as or different from the phase of the reference unit period. By making the length of the local time unit period the same as the length of the reference unit period, the running speed of the local time is the same. In this way, the calibration of the running speed of the local clock is realized.

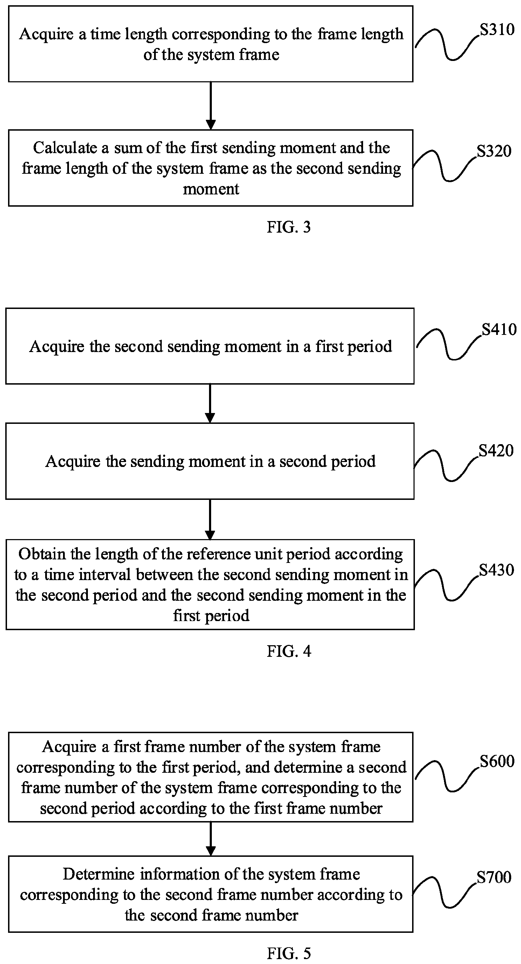

Referring to FIG. 3, it can be understood that the SIB in the embodiment shown in FIG. 2 is located at the end of the system frame, and S300 includes, but not limited to, the following steps S310 and S320.

At S310, a time length corresponding to the frame length of the system frame is acquired.

In an embodiment, the UE acquires the frame length of the system frame by receiving an instruction from the base station, or acquires the length of the system frame according to a system frame length recorded by the local clock. The instruction indicating the frame length of the system frame from the base station may be a system frame which is the same as or different from the system frame including the SIB. When the system frame including the length of the system frame from the base station is different from the system frame including the SIB, the system frame including the length of the system frame can be positioned either before or after the system frame including the SIB.

It should be noted that the time length corresponding to the frame length of the system frame is 10 ms. In a system frame with a variable frame length, the frame length of the system frame may also be 15 ms or 20 ms. It can be understood by those having ordinary skills in the art that as technologies are gradually developing, the frame length of the system frame may also have other possible values.

At S320, a sum of the first sending moment and the frame length of the system frame is calculated as the second sending moment.

In an embodiment, the first sending moment is the moment at which the system frame is sent, the SIB is located at the end of the system frame, and the sum of the first sending moment and the frame length of the system frame is equal to a moment at which the end of the system frame is sent, i.e., a moment at which the base station sends the SIB.

Referring to FIG. 4, it can be understood that S400 in the embodiment shown in FIG. 2 further includes, but not limited to, the following steps S410, S420, and S430.

At S410, the second sending moment in a first period is acquired.

At S420, the second sending moment in a second period is acquired,
where the second period is later than the first period.

It can be understood that the base station sends the system frame including the SIB based on a certain period. One system frame including the SIB is included in the first period, and one system frame including the SIB is included in the second period. The first period is a period of any system frame including the SIB and acquired by the UE from the base station, and the second period is a period of any system frame including the SIB and acquired by the UE after the first period. For example, if the base station sends the system frame including the SIB in the first period at the 0th second, and the period of sending the system frame by the base station is 640 ms, the time at which the base station sends the system frame including the SIB in the second period may be 640 ms, 1280 ms, 1920 ms, etc.

At S430, the length of the reference unit period is obtained according to a time interval between the second sending moment in the second period and the second sending moment in the first period.

In an embodiment, the UE receives the second sending moment in the first period and the second sending moment in the second period, and obtains the length of the reference unit period based on the number of oscillation periods of the crystal oscillator of the UE between the second sending moment in the first period and the second sending moment in the second period.

Referring to FIG. 5, it can be understood that in the embodiment shown in FIG. 2, the second period is adjacent to the first period, and the local clock calibration method provided in the embodiments of the present disclosure further includes the following steps S600 and S700.

At S600, a first frame number of the system frame corresponding to the first period is acquired, and a second frame number of the system frame corresponding to the second period is determined according to the first frame number.

At S700, information of the system frame corresponding to the second frame number is determined according to the second frame number.

It should be noted that the first period is adjacent to the second period, the system frame in the first period and the system frame in the second period are two system frames including the SIB, and the UE acquires the first frame number of the system frame in the first period and determines the frame number of the system frame in the second period according to the first frame number and the sending period of the system frame, thereby realizing the reading of the system frame in the second period. For example, if the first frame number of the system frame is 12300 and the period of sending the system frame including the SIB is 64 frames, the second frame number is 12364. After reading the first frame number of the system frame, the UE directly reads the system frame corresponding to the frame number of 12364 to obtain the second sending moment in the second period.

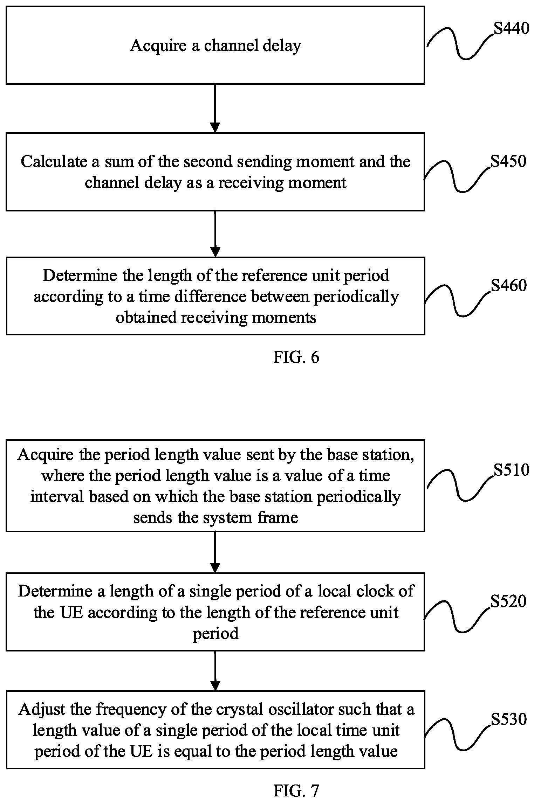

Referring to FIG. 6, S400 in the embodiment shown in FIG. 2 includes, but not limited to, the following steps S440, S450, and S460.

At S440, a channel delay is acquired.

In an embodiment, the UE receives the second sending moment, records a moment t0 at which the second sending moment is received, and sends a reply message to the base station at a moment t1. The base station receives the reply message at a moment t2. The channel delay from the base station to the UE is equal to half of the sum of the time difference between the moment t0 and the second sending moment and the time difference between the moment t2 and the moment t1. The base station sends the calculated channel delay to the UE.

It can be understood that the channel delay may also be acquired by another method, where the UE first sends a message to the base station, the base station sends to the UE a moment at which the message from the UE is received and a moment at which the base station sends a message to the UE, and the UE calculates the delay according to the moment at which the UE sends the message and the moment at which the UE receives the message.

At S450, a sum of the second sending moment and the channel delay is calculated as a receiving moment.

In an embodiment, the second sending moment is a moment at which the base station sends the SIB, the sum of the second sending moment and the channel delay is the moment at which the UE receives the SIB, and the receiving moment is an accurate time at which the base station transmits the SIB to the UE.

At S460, the length of the reference unit period is determined according to a time difference between periodically obtained receiving moments.

It can be understood that the receiving moment is obtained by adding the second sending moment and the channel delay, the second sending moment is obtained by adding the first sending moment and the frame length of the system frame, the first sending moment is a moment carried in the periodically sent system frame, and the reference unit period can be obtained by calculating the time difference between two periodically obtained receiving moments. The UE receives a receiving moment in the first period and a receiving moment in the second period, and obtains the reference unit period based on the number of oscillation periods of the crystal oscillator of the UE between the receiving moment in the first period and the receiving moment in the second period.

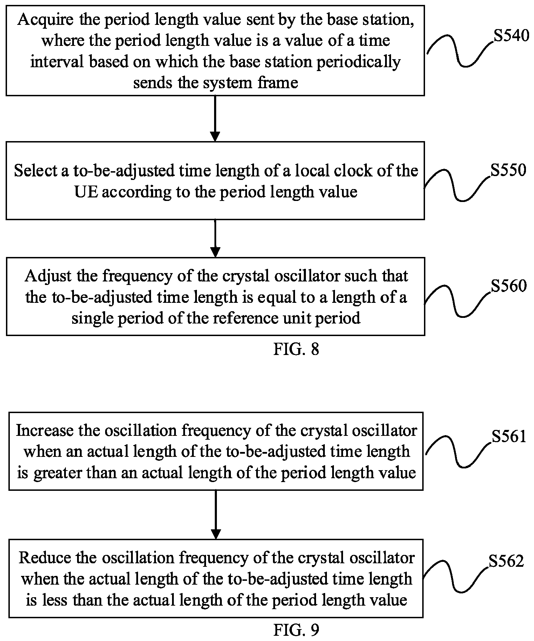

Referring to FIG. 7 and FIG. 8, adjusting the frequency of the crystal oscillator of the UE according to the length of the reference unit period and a period length value sent by the base station in S500 in the embodiment shown in FIG. 2 may be implemented based on Manner One or Manner Two.

Referring to FIG. 7, Manner One includes, but not limited to, the following steps S510, S520, and S530.

At S510, the period length value sent by the base station is acquired, where the period length value is a value of a time interval based on which the base station periodically sends the system frame.

In an embodiment, the UE acquires the period length value sent by the base station, where the period length value is the value of the time interval based on which the base station periodically sends the system frame. The time interval is equal to a value of a time interval of two adjacent first sending moments, and is also equal to a value of a time interval between two adjacent second sending moments and a value of a time interval between two adjacent second sending moments received by the UE.

It should be noted that the period length value is sent by the base station. The period length value may be carried in the system frame including the SIB sent by the base station, or may be transmitted separately by the base station through an additional system frame. The period length value may be 320 ms, 640 ms, etc.

At S520, a length of a single period of a local clock of the UE is determined according to the length of the reference unit period.

In an embodiment, in one period in which the base station periodically sends the system frame, one or more system frames including the SIB may be included. When two system frames including the SIB are included within the period length value sent by the base station, the period length value is the length of a single period of two reference unit periods.

At S530, the frequency of the crystal oscillator is adjusted such that a length value of a single period of the local time unit period of the UE is equal to the period length value.

It can be understood that the length value of a single period of the local time unit period of the UE may be 500 ms, 700 ms, 1s, etc., and the frequency of the crystal oscillator is adjusted such that the length value of a single period of the local time unit period of the UE is equal to the period length value, thereby achieving local clock calibration of the UE.

Referring to FIG. 8, Manner Two includes, but not limited to, the following steps S540, S550, and S560.

At S540, the period length value sent by the base station is acquired, where the period length value is a value of a time interval based on which the base station periodically sends the system frame.

In an embodiment, the UE acquires the period length value sent by the base station, where the period length value is the value of the time interval based on which the base station periodically sends the system frame. The time interval is equal to a value of a time interval of two adjacent first sending moments, and is also equal to a value of a time interval between two adjacent second sending moments and a value of a time interval between two adjacent second sending moments received by the UE.

At S550, a to-be-adjusted time length of a local clock of the UE is selected according to the period length value.

It should be noted that, according to the period length value, a time of the local clock of the UE that is equal to the period length value is selected as the to-be-adjusted time length. For example, if the period length value is 640 ms, 640 ms at a current oscillation frequency of the crystal oscillator of the UE is selected as the to-be-adjusted time length. Because the oscillation frequency of the crystal oscillator set at the UE may be deviated from an actual oscillation frequency of the crystal oscillator, the to-be-adjusted time length set at the UE is not equal to the time length of the period length value. For example, a time period of 640 ms is selected at the UE as the to-be-adjusted time length, and the actual length of the to-be-adjusted time length may be 630 ms or 650 ms.

At S560, the frequency of the crystal oscillator is adjusted such that the to-be-adjusted time length is equal to a length of a single period of the reference unit periods.

In an embodiment, the actual length of the to-be-adjusted time length is different from the actual length of the period length value. The frequency of the crystal oscillator is adjusted such that the actual length of the to-be-adjusted time length is equal to the actual length of the period length value, thereby achieving local clock calibration of the UE.

Referring to FIG. 9, it can be understood that S560 in the embodiment shown in FIG. 8 further includes, but not limited to, the following steps S561 and S562.

At S561, the oscillation frequency of the crystal oscillator is increased when an actual length of the to-be-adjusted time length is greater than an actual length of the period length value.

For example, a time period of 640 ms is selected at the UE as the to-be-adjusted time length, and the actual length of the to-be-adjusted time length may be 650 ms. In this case, the oscillation frequency of the crystal oscillator is increased to make the actual length of the to-be-adjusted time length gradually approach 640 ms. When the actual length of the to-be-adjusted time length is less than 640 ms, the oscillation frequency of the crystal oscillator is reduced to make the actual length of the to-be-adjusted time length gradually approach 640 ms. The frequency adjustment is ended when the difference between the actual length of the to-be-adjusted time length and the actual length of the period length value is less than a preset time length.

It can be understood that the actual length of the period length value is the time interval between two first sending moments.

At S562, the oscillation frequency of the crystal oscillator is reduced when the actual length of the to-be-adjusted time length is less than the actual length of the period length value.

For example, a time period of 640 ms is selected at the UE as the to-be-adjusted time length, and the actual length of the to-be-adjusted time length may be 630 ms. In this case, the oscillation frequency of the crystal oscillator is reduced to make the actual length of the to-be-adjusted time length gradually approach 640 ms. When the actual length of the to-be-adjusted time length is less than 640 ms, the oscillation frequency of the crystal oscillator is increased to make the actual length of the to-be-adjusted time length gradually approach 640 ms. The frequency adjustment is ended when the difference between the actual length of the to-be-adjusted time length and the actual length of the period length value is less than a preset time length.

It can be understood that the embodiment shown in FIG. 6 further includes: adjusting a phase of the local time unit period according to the receiving moment such that the local time unit period and the reference unit period are in-phase.

It should be noted that the UE adjusts the phase of the local time unit period according to the phase of the reference unit period acquired at the receiving moment, thereby realizing the calibration of the local clock. For example, if the phase of the reference unit period at the receiving moment is 0 degrees and the phase of the local time unit period is 135 degrees, the phase of the local time unit period is adjusted such that the phase of the local time unit period is the same as the phase of the reference unit period.

In addition, another embodiment of the present disclosure provides a UE, including: a memory, a processor, and a computer program stored in the memory and executable by the processor.

The processor and the memory may be connected by a data bus or in other ways.

The memory, as a non-transitory computer-readable storage medium, may be configured for storing a non-transitory software program and a non-transitory computer-executable program. In addition, the memory may include a high-speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the processor via a network. Examples of the network include, but not limited to, the Internet, an intranet, a local area network, a mobile communication network, and combinations thereof.

The non-transitory software program and instructions required to implement the local clock calibration method of the foregoing embodiments are stored in the memory which, when executed by the processor, cause the processor to implement the local clock calibration method of the foregoing embodiments, for example, implement the method steps S200 to S500 in FIG. 2, the method steps S310 and S320 in FIG. 3, the method steps S410 to S430 in FIG. 4, the method steps S600 and S700 in FIG. 5, the method steps S440 to S460 in FIG. 6, the method steps S510 to S530 in FIG. 7, the method steps S540 to S560 in FIG. 8, or the method steps S561 to S562 in FIG. 9.

The apparatus embodiments described above are merely examples. The units described as separate components may or may not be physically separated, i.e., may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing a computer-executable instruction which, when executed by a processor or controller, for example, by a processor in the embodiment described above, may cause the processor to implement the local clock calibration method of the foregoing embodiments, for example, implement the method steps S200 to S500 in FIG. 2, the method steps S310 and S320 in FIG. 3, the method steps S410 to S430 in FIG. 4, the method steps S600 and S700 in FIG. 5, the method steps S440 to S460 in FIG. 6, the method steps S510 to S530 in FIG. 7, the method steps S540 to S560 in FIG. 8, or the method steps S561 to S562 in FIG. 9.

The local clock calibration method provided in the embodiments of the present disclosure at least has the following beneficial effects. A system frame periodically sent by a base station is received and a first sending moment included in a SIB in the system frame is read. A second sending moment at which the SIB is sent is determined according to the first sending moment and a frame length of the system frame. A length of a reference unit period is determined according to a time interval between periodically obtained second sending moments. A frequency of a crystal oscillator of the UE is adjusted according to the length of the reference unit period and a period length value sent by the base station, to make a local time unit period of the UE consistent with the reference unit period. In this way, the UE can receive a time signal from the base station and calibrates its local clock, thereby enhancing the precision of the local clock. With the embodiments of the present disclosure, time information can be received in indoor or mountainous areas, thereby achieving local clock calibration.

Those having ordinary skills in the art will understand that all or some of the steps in the methods disclosed above, as well as the functional modules/units in the system and apparatus, can be implemented as software, firmware, hardware, or appropriate combinations thereof.

In a hardware implementation, the division of the functional modules/units mentioned in the above description does not necessarily correspond to the division of physical components. For example, one physical component may have multiple functions, or one function or step may be jointly executed by several physical components. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure are described above with reference to the accompanying drawings, these embodiments are not intended to limit the protection scope of the present disclosure. Any modifications, equivalent replacements and improvements made by those having ordinary skills in the art without departing from the scope and essence of the present disclosure shall fall within the protection scope of the present disclosure.

## Claims

1. A local clock calibration method, applied to a User Equipment (UE), the method comprising:
acquiring a system frame periodically sent by a base station, wherein the system frame comprises a System Information Block (SIB), and the SIB comprises a first sending moment at which the base station sends the system frame;
determining, according to the first sending moment and a frame length of the system frame, a second sending moment at which the base station sends the SIB;
determining a length of a reference unit period according to a time interval between periodically obtained second sending moments; and
adjusting a frequency of a crystal oscillator of the UE according to the length of the reference unit period and a period length value sent by the base station, to synchronize a local time unit period of the UE with the reference unit period.

2. The local clock calibration method of claim 1, wherein the SIB is located at an end of the system frame, and determining, according to the first sending moment and a frame length of the system frame, a second sending moment at which the base station sends the SIB comprises:
acquiring a time length corresponding to the frame length of the system frame; and
calculating a sum of the first sending moment and the frame length of the system frame as the second sending moment.

3. The local clock calibration method of claim 1, wherein determining a length of a reference unit period according to a time interval between periodically obtained second sending moments comprises:
acquiring the second sending moment in a first period;
acquiring the sending moment in a second period, wherein the second period is later than the first period; and
obtaining the length of the reference unit period according to a time interval between the second sending moment in the second period and the second sending moment in the first period.

4. The local clock calibration method of claim 3, wherein the second period is adjacent to the first period, and the method further comprises: acquiring a first frame number of the system frame corresponding to the first period, and determining a second frame number of the system frame corresponding to the second period according to the first frame number; and
determining information of the system frame corresponding to the second frame number according to the second frame number.

5. The local clock calibration method of claim 1, wherein determining a length of a reference unit period according to a time interval between periodically obtained second sending moments comprises:
acquiring a channel delay;
calculating a sum of the second sending moment and the channel delay as a receiving moment; and
determining the length of the reference unit period according to a time difference between periodically obtained receiving moments.

6. The local clock calibration method of any of claims 1 to 5, wherein adjusting a frequency of a crystal oscillator of the UE according to the length of the reference unit period and a period length value sent by the base station comprises:
acquiring the period length value sent by the base station, wherein the period length value is a value of a time interval based on which the base station periodically sends the system frame;
determining a length of a single period of a local clock of the UE according to the length of the reference unit period; and
adjusting the frequency of the crystal oscillator such that a length value of a single period of the local time unit period of the UE is equal to the period length value.

7. The local clock calibration method of any of claims 1 to 5, wherein adjusting a frequency of a crystal oscillator of the UE according to the length of the reference unit period and a period length value sent by the base station comprises:
acquiring the period length value sent by the base station, wherein the period length value is a value of a time interval based on which the base station periodically sends the system frame;
selecting a to-be-adjusted time length of a local clock of the UE according to the period length value; and
adjusting the frequency of the crystal oscillator such that the to-be-adjusted time length is equal to a length of a single period of the reference unit period.

8. The local clock calibration method of claim 7, wherein adjusting the frequency of the crystal oscillator such that the to-be-adjusted time length is equal to a length of a single period of the reference unit period comprises:
increasing an oscillation frequency of the crystal oscillator in response to an actual length of the to-be-adjusted time length being greater than an actual length of the period length value; and
reducing the oscillation frequency of the crystal oscillator in response to the actual length of the to-be-adjusted time length being less than the actual length of the period length value.

9. The local clock calibration method of claim 5, further comprising: adjusting a phase of the local time unit period according to the receiving moment such that the local time unit period and the reference unit period are in-phase.

10. A User Equipment (UE), comprising: comprising a memory, a processor, a program stored in the memory and executable by the processor, and a communication bus configured for implementing connection and communication between the processor and the memory, wherein the program, when executed by the processor, causes the processor to carry out the local clock calibration method of any of claims 1 to 9.

11. A computer-readable storage medium, storing a computer-executable program which, when executed by a computer, causes the computer to carry out the local clock calibration method of any of claims 1 to 9.
